(19) Europäisches Patentamt
European Patent Office
Office européen des brevets

(11) **EP 3 463 756 B1**

(12) **EUROPÄISCHE PATENTSCHRIFT**

(45) Veröffentlichungstag und Bekanntmachung des Hinweises auf die Patenterteilung:
**25.03.2020 Patentblatt 2020/13**

(21) Anmeldenummer: **17739845.0**

(22) Anmeldetag: **31.05.2017**

(51) Int Cl.:
**B25B 21/00** (2006.01)    **B25B 23/14** (2006.01)
**B25B 23/147** (2006.01)

(86) Internationale Anmeldenummer:
**PCT/AT2017/060142**

(87) Internationale Veröffentlichungsnummer:
**WO 2017/205887 (07.12.2017 Gazette 2017/49)**

(54) **VERFAHREN ZUM EINDREHEN EINER SCHRAUBE MIT EINEM VORBESTIMMTEN ANZUGSDREHMOMENT**

METHOD FOR SCREWING IN A SCREW TO A PREDETERMINED TIGHTENING TORQUE

PROCÉDÉ POUR INTRODUIRE UNE VIS AVEC UN COUPLE DE SERRAGE PRÉDÉFINI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.06.2016 AT 505012016**

(43) Veröffentlichungstag der Anmeldung:
**10.04.2019 Patentblatt 2019/15**

(73) Patentinhaber: **STIWA Holding GmbH**
**4800 Attnang-Puchheim (AT)**

(72) Erfinder:
• **BRUNNER, Matthias**
**4840 Vöcklabruck (AT)**
• **GLÜCK, Tobias**
**1020 Wien (AT)**
• **GRÜNDL, August**
**4861 Schörfling (AT)**
• **KUGI, Andreas**
**1200 Wien (AT)**
• **MEINGASSNER, Josef**
**4921 Hohenzell (AT)**
• **PAUDITZ, Michael**
**4690 Schwanenstadt (AT)**

(74) Vertreter: **Burger, Hannes**
**Anwälte Burger & Partner**
**Rechtsanwalt GmbH**
**Rosenauerweg 16**
**4580 Windischgarsten (AT)**

(56) Entgegenhaltungen:
WO-A1-2008/093402        DE-A1- 4 128 427
DE-A1-102008 035 688     US-A- 5 062 491
US-A1- 2013 056 236

## Beschreibung

Die Erfindung betrifft ein Verfahren zum Eindrehen einer Schraube oder Mutter mit einem vorbestimmten Anzugsdrehmoment gemäß dem Oberbegriff der Patentansprüche 1, 14 und 15.

Aus dem Stand der Technik sind verschiedene Verfahren zum Herstellen einer Schraubverbindung zwischen zwei Bauteilen bekannt. Die aus dem Stand der Technik bekannten Verfahren betreffen insbesondere Fertigungsanlagen in welchen Schrauben oder Muttern mittels einem Werkzeug welches mit einem Elektromotor gekoppelt ist in das jeweilige der Schraube oder Mutter zugehörige Gegengewinde eingeschraubt werden, um ein Bauteil zu befestigen. Dabei müssen die Schrauben bzw. Muttern mit einem vorbestimmten Anzugsdrehmoment angezogen werden, wobei das zu erreichende Anzugsdrehmoment nur einen geringen Toleranzbereich aufweist.

Aus der WO 2008/093402 A1 und der US 2013/056236 A1 sind beispielsweise Verfahren gemäß dem Oberbegriff der Patentansprüche 1, 14 und 15 zum Herstellen einer Schraubverbindung zwischen zwei Bauteilen bekannt.

Die aus dem Stand der Technik bekannten Verfahren weisen den Nachteil auf, dass zum Erreichen des geforderten Anzugsdrehmomentes unter Einhaltung des geforderten Toleranzbereiches die Eindrehgeschwindigkeit entsprechend gering gewählt werden muss, um das Anzugsdrehmoment verfälschende dynamische Effekte welche aufgrund der Massenträgheit des Antriebsstranges auftreten, hintanzuhalten.

Aufgabe der vorliegenden Erfindung war es, die Nachteile des Standes der Technik zu überwinden und ein Verfahren zur Verfügung zu stellen, welches eine erhöhte Prozessgeschwindigkeit bei gleichzeitiger Aufrechterhaltung der Prozessgenauigkeit aufweist.

Diese Aufgabe wird durch Verfahren gemäß der Patentansprüche 1, 14 und 15 gelöst.

Erfindungsgemäß ist ein Verfahren zum Eindrehen einer Schraube oder Mutter mit einem vorbestimmten Anzugsdrehmoment mittels einem Eindrehwerkzeug, welches mit einem Elektromotor gekoppelt ist, vorgesehen. Der Elektromotor wird von einer Regelung angesteuert. Das Verfahren umfasst folgende Verfahrensschritte:

- Herstellen einer Drehmomentenübertragenden Verbindung zwischen Eindrehwerkzeug und Schraube oder Mutter;
- Beschleunigen des Elektromotors in Zudrehrichtung auf eine vorgegebene Maximaldrehzahl;
- Betreiben des Elektromotors in Maximaldrehzahl bis eine Antriebswelle des Elektromotors eine vorgegebene Anzahl an Spindelumdrehungen absolviert hat, wobei während diesem Verfahrensschritt die Schraube oder Mutter frei in das jeweilige Gegengewinde eingedreht wird, oder das Gegengewinde mittels der Schraube geschnitten wird;
- Reduzieren der Drehzahl des Elektromotors auf eine vorbestimmte reduzierte Drehzahl;
- Betreiben des Elektromotors in reduzierter Drehzahl bis, vorzugsweise von einer dem Elektromotor nachgeschalteten Messeinheit, ein Drehmomentenanstieg detektiert wird welcher einen vorbestimmten Schwellenwert überschreitet, wobei der Drehmomentenanstieg dann auftritt, wenn die Schraube oder Mutter mit deren Schulter am zu befestigenden Bauteil zum Anliegen kommt;
- Nachdrehen der Schraube oder Mutter bis das vorbestimmte Anzugsdrehmoment erreicht ist.

Ein Vorteil des erfindungsgemäßen Verfahrens liegt darin, dass das Verfahren in verschiedenste Verfahrensschritte aufgeteilt wird, wobei der Elektromotor in den einzelnen Verfahrensschritten eine unterschiedliche Geschwindigkeit aufweist. Durch diese Maßnahme wird erreicht, dass die Einschraubzeit möglichst verkürzt werden kann und gleichzeitig das geforderte Anzugsdrehmoment möglichst genau erreicht werden kann. Insbesondere beim Betrieb des Elektromotors in einer vorgegebenen Maximaldrehzahl wird ein möglichst schnelles Eindrehen der Schraube gewährleistet. In diesem Verfahrensschritt wird die Schraube in das entsprechende Gegengewinde eingedreht, wobei darauf geachtet wird, dass die Schraube frei in das Gewinde eingedreht wird und die Schulter noch nicht am zu befestigenden Bauteil anliegt. Alternativ zum freien Eindrehen der Schraube in ein Gegengewinde kann auch vorgesehen sein, dass das Gegengewinde von der Schraube ausgeformt wird. Auch hier ist das aufzubringende Drehmoment deutlich geringer als dies beim Anliegen der Schulter der Schraube der Fall ist. Erst im anschließenden Verfahrensschritt in welchem der Elektromotor in reduzierter Drehzahl betrieben wird ist vorgesehen, dass die Schulter der Schraube am zu befestigenden Bauteil zur Anlage kommt. Dieses Anliegen der Schulter der Schraube am zu befestigenden Bauteil hat einen Drehmomentenanstieg zur Folge. Dieser Drehmomentenanstieg kann beispielsweise durch Erfassung des Motorstromes im Elektromotor direkt detektiert werden.

Der Drehmomentenanstieg wird von einer dem Elektromotor nachgeschalteten Messeinheit detektiert, welche Messeinheit zum Erfassen des Drehmomentes, etwa in Form einer Drehmomentmesswelle, ausgebildet ist.

Gemäß einem Aspekt der Erfindung wird nach der Detektion des Drehmomentenanstieges der Elektromotor auf eine vorbestimmte Minimaldrehzahl abgebremst. Von Vorteil ist hierbei, dass durch Abbremsen des Elektromotors auf Minimalgeschwindigkeit ein Überanziehen der Schraube verhindert werden kann.

Gemäß einem Aspekt der Erfindung ist vorgesehen, dass der Elektromotor eine vorbestimmte oder vorbestimmbare Zeitdauer in Minimaldrehzahl betrieben wird, bis Schwingungen, welche im Antriebssystem aufgrund des Abbremsvorganges von der reduzierten Drehzahl in die Minimaldrehzahl auftreten, weitestgehend ausgeklungen sind. Von Vorteil ist hierbei, dass durch das Betreiben des Elektromotors in der Minimaldrehzahl in vorbestimmter Zeitdauer erreicht werden kann, dass das Antriebssystem ausschwingen kann und es somit zu keiner Verfälschung des gemessenen Drehmomentes an der Messeinheit kommt. In Extremfällen kann es notwendig sein, dass als Minimaldrehzahl kompletter Stillstand gewählt wird. Die Schwingungen, welche ausklingen müssen entstehen aufgrund der Massenträgheit bzw. der Trägheitskräfte der einzelnen Komponenten im Antriebssystem und aufgrund des abrupten Abbremsmanövers.

Gemäß einem weiteren Aspekt der Erfindung ist vorgesehen, dass nach Ablauf der vorbestimmten Zeitdauer in welcher der Elektromotor in Minimaldrehzahl betrieben wird, die weitere Ansteuerung des Elektromotors von der Regelung auf Basis des in der Messeinheit gemessenen Drehmomentes vorgegeben wird. Die vorbestimmte Zeitdauer kann individuell für jeden Zyklus neu festgelegt werden. Nach Ablauf dieser vorbestimmten Zeitdauer in welcher das Sensorsignal verfälscht wird, kann auf Drehmomentenregelung umgestellt werden, um das geforderte Anzugsdrehmoment erreichen zu können.

Vorteilhaft ist auch eine Ausprägung, gemäß welcher vorgesehen sein kann, dass die reduzierte Drehzahl zwischen 0,1% und 99%, insbesondere zwischen 0,5% und 99%, bevorzugt zwischen 50% und 80% der Maximaldrehzahl beträgt. Von Vorteil ist hierbei, dass bei Betrieb des Elektromotors in reduzierter Drehzahl ein Drehmoment, welches einem vorbestimmten Schwellenwert überschreitet, detektiert werden kann und aufgrund der reduzierten Drehzahl anschließend ausreichend Zeit verbleibt, um die Drehzahl weiter zu senken und das geforderte Drehmoment einzustellen.

Gemäß einem weiteren Aspekt der Erfindung ist vorgesehen, dass direkt nach der Detektion des Drehmomentenanstieges die weitere Ansteuerung des Elektromotors von der Regelung auf Basis eines Drehmomentwertes vorgegeben wird, wobei nach der Detektion des Drehmomentenanstieges der Elektromotor auf eine vorbestimmte Minimaldrehzahl abgebremst wird und in einer Anfangsperiode während des Abbremsvorganges das in der Messeinheit erfasste Drehmoment von einem auf einer Modellrechnung basierten Drehmoment überblendet wird und nach der Anfangsperiode das von der Messeinheit detektierte Drehmoment als Eingangsgröße für die Regelung dient. Diese Alternativvariante weist den Vorteil auf, dass die Verfahrenszeit weiter verkürzt und optimiert werden kann. Durch das Überblenden des erfassten Drehmomentes mit einem auf einer Mollrechnung basierten Drehmoment kann der Messfehler, welcher aufgrund des Schwingens des Systems nach dem Abbremsvorgang des Elektromotors auftritt, ausgeglichen werden.

Gemäß einem weiteren Aspekt der Erfindung ist vorgesehen, dass direkt nach der Detektion des Drehmomentenanstieges die weitere Ansteuerung des Elektromotors von der Regelung auf Basis einer Solltrajektorie des Drehmomentwertes vorgegeben wird, wobei der Drehzahlverlauf in einer Vorsteuerung aus der Solltrajektorie des Drehmomentwertes berechnet wird. Wird ein Störgrößenbeobachter verwendet, kann das tatsächlich an der Schraube wirkende Moment geschätzt werden. Durch überblenden auf dieses geschätzte Moment können Störungen ausgeblendet werden.

Gemäß einem weiteren Aspekt der Erfindung ist vorgesehen, dass in einer ersten Phase nach der Detektion des Drehmomentenanstieges der Drehmomentwert mittels einem Störgrößenbeobachter geschätzt wird und dass in einer zweiten Phase nach der Detektion des Drehmomentenanstieges das Drehmoment direkt von der Messeinheit detektiert wird und als Eingangsgröße für die Regelung dient. Durch Vorgabe des Drehmomentwertes mittels dem Störgrößenbeobachter können Schwingungen bzw. Störungen im System gefiltert werden, sodass es in der Regelung zu keinem Aufschwingen kommt. Nach dem Abklingen der Schwingungen kann anschließend das tatsächlich an der Messeinheit gemessene Drehmoment als Eingangswert für die Regelung dienen.

Weiters kann vorgesehen sein, dass der Übergang zwischen verschiedenen Drehzahlen der einzelnen Verfahrensschritte derart vorgegeben wird, dass keine sprungartigen Anstiege der Beschleunigung auftreten. Durch die Vermeidung von sprungartigen Anstiegen in der Beschleunigung kann der Ruck, der auf die einzelnen Bauteile des Schraubers einwirkt vermindert werden und dadurch die Langlebigkeit des Schraubers erhöht werden.

Ferner kann es zweckmäßig sein, wenn in der Modellrechnung die Massenträgheit und/oder die Federsteifigkeit und/oder die Dämpfung und die Winkelbeschleunigungen der einzelnen im Antriebsstrang verbauten Bauteile berücksichtigt wird. Von Vorteil ist hierbei, dass auf Grundlage dieser Werte bzw. auf Grundlage dieser Zustandsgrößen das dynamische Verhalten des Antriebsstranges genau berechnet werden kann und dadurch eine Verfälschung des gemessenen Drehmomentes beim Abbremsen bzw. beim Beschleunigen des Elektromotors ausgeglichen werden kann.

Darüber hinaus kann vorgesehen sein, dass die Modellrechnung auf Basis der jeweils vorhergehenden Zyklen in einem iterativen Lernprozess angepasst wird, wobei zur Anpassung der Modellrechnung der Zeitliche Verlauf des Messwertes des Drehmomentes in der Messeinheit, sowie des Motormomentes und des zugehörigen Drehwinkels der Antriebswelle im Elektromotor herangezogen wird. Von Vorteil ist hierbei, dass das Antriebsverfahren während dem laufenden Betrieb angepasst und verbessert werden kann, wodurch einerseits die Genauigkeit zur Erreichung des Anzugsdrehmomentes erhöht werden kann und darüber hinaus die Prozesszeit weiter verkürzt werden kann.

Es kann außerdem vorgesehen sein, den Regelkreis um eine Vorsteuerung zur Kraft- und/oder Trägheitskompensation zu erweitern, sollte die Dynamik der unterlagerten Regler nicht ausreichen. Die Vorsteuerungen können anhand der mathematischen Modelle hergeleitet werden. Es kann ausreichend sein, dafür ein stark vereinfachtes Modell, wie ein reines Starrkörpersystem, welches nur die Trägheitsmomente und keine dynamischen Elemente berücksichtigt, heranzuziehen. Alternativ dazu kann ein dynamisches System, wie es in diesem Dokument beschrieben ist zur mathematischen Modellbildung herangezogen werden.

Weiters kann vorgesehen sein, dass für die Modellrechnung ein Störgrößenbeobachter, insbesondere ein Kalman-Filter eingesetzt wird, auf den im ersten Schritt auch geregelt wird und erst ab einem bestimmten Zeitpunkt auf das in der Messeinheit detektierte Drehmoment überblendet wird. Von Vorteil ist hierbei, dass ein derartiger Störgrößenbeobachter die tatsächlich anliegenden Ist-Werte mit den aus dem Modell ermittelten Ausgangsgrößen vergleichen kann und als Ausgangswert ein externes Moment an die Regelung vorgegeben werden kann, wodurch die Genauigkeit bei der Erreichung des Anzugsdrehmomentes verbessert werden kann.

Gemäß einer besonderen Ausprägung ist es möglich, dass zwischen Elektromotor und Eindrehwerkzeug ein Getriebe angeordnet ist, mittels welchem die Drehzahl bzw. das Drehmoment zwischen Elektromotor und Eindrehwerkzeug übersetzt wird. Von Vorteil ist hierbei, dass das Drehmoment des Elektromotors durch das Getriebe übersetzt werden kann, wobei ein nur geringes Motormoment ausreicht, um ein ausreichendes Moment auf die Schraube aufbringen zu können. In gleicher Weise wird durch das Getriebe erreicht, dass die Auflösegenauigkeit des Motors aufgrund der Übersetzung durch das Getriebe verbessert werden kann.

Wird in diesem Dokument von einer Schraube gesprochen, so werden zusätzlich zu einer schraube sämtliche Befestigungsmittel adressiert, welche ein Gewinde aufweisen und zum Klemmen eines Bauteils durch einschrauben dienen. Dies sind beispielsweise auch Muttern, wobei auch diese eine Schulter aufweisen, welche an einem zu befestigenden Bauteil anliegen kann. Ein entsprechendes Gegengewinde für eine Schraube ist ein Gewindeloch oder eine Mutter. Bei Schrauben mit selbstschneidenden Gewinden kann das zugehörige Gegenloch ein einfaches Loch sein, welches kein Gewinde aufweist, da das Gewinde durch die Schraube direkt geschnitten wird. Ein entsprechendes Gegengewinde für eine Mutter ist eine Schraube oder ein Gewindestift.

Die Maximaldrehzahl auf die der Elektromotor beschleunigt wird muss nicht zwangsweise der maximal möglichen Drehzahl des Elektromotors entsprechen. Vielmehr ist es auch möglich, dass die Maximaldrehzahl sich aufgrund der Prozessparameter ergibt und ein rechnerisch ermittelter Wert ist. Die vorgegebene Maximaldrehzahl kann dabei von einem Eindrehprozess zum nächsten variieren.

Der Schwellwert des Drehmomentes, welcher detektiert wird, kann ein vorgegebener oder individuell vorgebbarer Absolutwert des Drehmomentes, etwa in Nm, sein.

Alternativ dazu ist es auch möglich, dass als Schwellwert nicht ein Absolutwert des Drehmomentes vorgegeben wird, sondern dass als Schwellwert ein vorgegebener oder individuell vorgebbarer Drehmomentenanstieg pro Drehwinkeleinheit des Motors vorgegeben wird. Dieser Schwellwert des Drehmomentenanstieges kann etwa in Nm pro °Drehwinkel definiert sein.

In wieder einer anderen Ausführungsvariante ist es denkbar, dass als Schwellwert eine maximale Änderung des Drehmomentenanstieges pro Drehwinkeleinheit der Schraube vorgegeben wird. Diese maximale Änderung des Drehmomentenanstieges pro Drehwinkeleinheit kann beispielsweise durch die erste Ableitung der Funktion des Drehmomentenanstieges pro Drehwinkeleinheit des Motors berechnet werden. Dieser Schwellwert der Änderung des Drehmomentenanstieges kann etwa in ΔNm pro Δ°Drehwinkel definiert sein.

Als Regelung im Sinne dieses Dokumentes kann eine Zweifreiheitsgrademomentenregelung mit unterlagerter Motorregelung verstanden werden, wobei ein Regelkreis mit dieser Regelung auch zusätzliche Vorsteuerungen aufweisen kann.

Weiters kann vorgesehen sein, dass auf Basis von der Lastkennlinie und einer gewünschten Solltrajektorie für das externe Moment ein Drehzahlverlauf berechnet wird. Diese Geschwindigkeit knüpft bei der reduzierten Drehzahl an und wird in den Stillstand übergeführt. Mit diesem Drehzahlprofil wird sichergestellt, dass das externe Moment der gewünschten Solltrajektorie hinreichend gut folgt. Dadurch ist es in weiterer Folge möglich die bleibende Regelabweichung mit einem linearen Regler $R_M$ auszugleichen. Wird ein Störgrößenbeobachter verwendet so wird auf das geschätzte Signal geregelt und am Ende der Trajektorie auf das Messsignal übergeblendet. Ist der Störgrößenbeobachter nicht vorhanden, weil die Güte des Messsignals hinreichend gut ist, dann wird direkt auf das Messsignal geregelt und dadurch auch keine Überblendung durchgeführt.

Zum besseren Verständnis der Erfindung wird diese anhand der nachfolgenden Figuren näher erläutert.

Es zeigen jeweils in stark vereinfachter, schematischer Darstellung:

Fig. 1     eine schematische Darstellung eines möglichen Aufbaues eines Schraubers;

Fig. 2     ein Ablaufdiagramm einer ersten Regelungsstrategie zum Eindrehen einer Schraube;

Fig. 3     ein Ablaufdiagramm einer zweiten Regelungsstrategie zum Eindrehen der Schraube;

Fig. 4     ein Strukturschaltbild des mechanischen Modells des Schraubers;

Fig. 5     ein vereinfachtes Strukturschaltbild des mechanischen Modells des Schraubers;

Fig. 6 ein exemplarischer Verlauf des externen Momentes;

Fig. 7 ein Strukturschaltbild eines Regelkreises für die Momentenregelung;

Fig. 8 eine exemplarische Regelstrecke einer Momentenregelung;

Fig. 9 ein Strukturschaltbild eines Regelkreises mit Störgrößenbeobachter und Lastvorsteuerung, Momentenvorsteuerung sowie Trägheitskompensation;

Fig. 10 ein Strukturschaltbild eines Regelkreises mit Störgrößenbeobachter und Momentenvorsteuerung sowie Trägheitskompensation;

Fig. 11 ein Strukturschaltbild eines Regelkreises mit Störgrößenbeobachter und Momentenvorsteuerung;

Fig. 12 ein Strukturschaltbild eines Regelkreises mit Störgrößenbeobachter und Lastvorsteuerung sowie Momentenvorsteuerung;

Fig. 13 ein Strukturschaltbild eines Regelkreises mit Lastvorsteuerung, Momentenvorsteuerung sowie Trägheitskompensation;

Fig. 14 ein Strukturschaltbild eines Regelkreises mit Momentenvorsteuerung sowie Trägheitskompensation;

Fig. 15 ein Strukturschaltbild eines Regelkreises mit Momentenvorsteuerung;

Fig. 16 ein Strukturschaltbild eines Regelkreises mit Lastvorsteuerung sowie Momentenvorsteuerung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

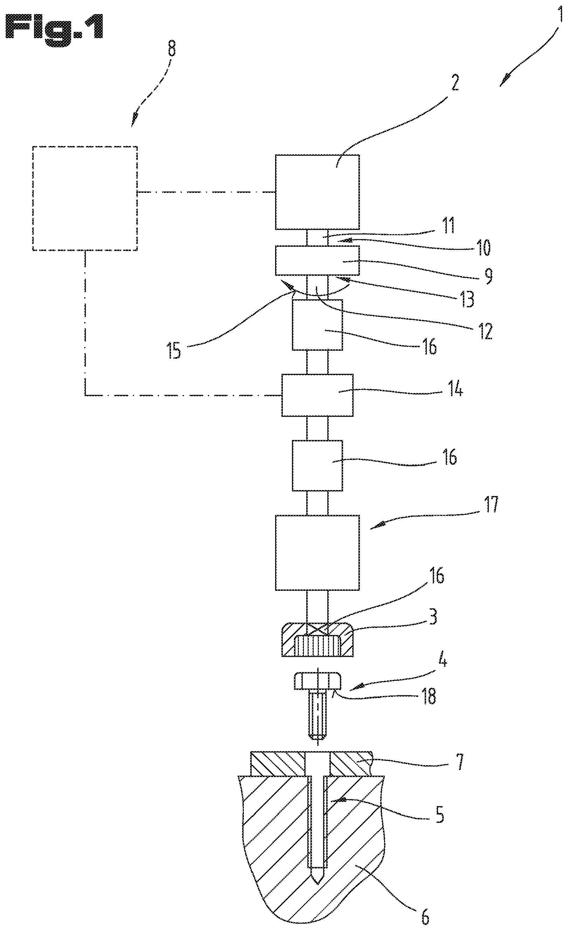

Fig. 1 zeigt eine schematische Darstellung eines Prozessschraubers 1. Der Prozessschrauber 1 umfasst einen Elektromotor 2, und ein mit dem Elektromotor 2 gekoppeltes Eindrehwerkzeug 3. Das Eindrehwerkzeug 3 kann mit einer Schraube 4 oder einer Mutter gekoppelt werden, um eine drehmomentenübertragende Verbindung zwischen dem Eindrehwerkzeug 3, und der Schraube 4 herstellen zu können. Dadurch kann die Schraube 4 automatisiert in ein entsprechendes Gegengewinde 5 eines Aufnahmeobjektes 6 eingedreht werden, um ein Bauteil 7 am Aufnahmeobjekt 6 fixieren zu können.

Das Eindrehwerkzeug 3 bzw. die Schraube 4 können verschiedenste Formen zur Kraftübertragung, wie etwa Sechskant, Innensechskant, Torx usw. aufweisen.

Weiters kann vorgesehen sein, dass der Elektromotor 2 als Servomotor ausgeführt ist. Ein derartiger Servomotor kann beispielsweise ein Synchronmotor sein. Es ist vorgesehen, dass der Elektromotor 2 mit einer Regelung 8 verbunden ist. Weiters kann vorgesehen sein, dass ein Frequenzumrichter ausgebildet ist, welcher mit dem Elektromotor 2 zusammenwirkt und die Drehzahl des Elektromotors 2 vorgibt.

Wie aus Fig. 1 weiters ersichtlich kann vorgesehen sein, dass an den Elektromotor 2 ein Getriebe 9 gekoppelt ist. Mittels dem Getriebe 9 kann das Antriebsdrehmoment bzw. die Drehzahl des Elektromotors 2 übersetzt werden. Insbesondere wird es zweckmäßig sein, wenn das Getriebe 9 derart konfiguriert ist, dass am Getriebeeingang 10, welcher mit einer Antriebswelle 11 des Elektromotors 2 gekoppelt ist, eine höhere Drehzahl anliegt, als an einer Getriebeausgangswelle 12, welche sich an einem Getriebeausgang 13 des Getriebes 9 befindet.

Weiters ist vorgesehen, dass zwischen Elektromotor 2 und Eindrehwerkzeug 3 eine Messeinheit 14 angeordnet ist, welche zum Erfassen des am Eindrehwerkzeug 3 anliegenden Drehmomentes ausgebildet ist. Die Messeinheit 14 ist an die Regelung 8 gekoppelt. Die Messeinheit 14 ist vorzugsweise möglichst nahe am Eindrehwerkzeug 3 angeordnet. Wenn der Prozessschrauber 1 beispielsweise ein Getriebe 9 umfasst, so ist es zweckmäßig, dass die Messeinheit 14 auf jeden Fall zwischen Getriebe 9 und Eindrehwerkzeug 3 angeordnet ist, wobei die Messeinheit 14 natürlich möglichst nahe am Eindrehwerkzeug 3 angeordnet sein sollte. Mit anderen Worten ausgedrückt ist es vorteilhaft, wenn die Messeinheit 14 getriebeausgangsseitig 13 des Getriebes 9 angeordnet ist.

Die Getriebeausgangswelle 12 ist bezüglich Drehgeschwindigkeit und Drehmoment direkt an das Eindrehwerkzeug 3 gekoppelt, wodurch zum Eindrehen der Schraube 4 in das Gegengewinde 5 sich die Getriebeausgangswelle 12 in Zudrehrichtung 15 bewegen muss. Die Zudrehrichtung 15 ist dabei von der Gewindeorientierung der Schraube 4 abhängig. Weist die Schraube 4 beispielsweise ein Rechtsgewinde auf, so ist die Zudrehrichtung 15 auch rechtsdrehend. Wenn die Schraube 4 allerdings ein Linksgewinde aufweist, so ist die Zudrehrichtung 15 auch linksdrehend.

Weiters kann vorgesehen sein, dass zum Verbinden von Elektromotor 2 und Getriebe 9 bzw. zum Verbinden von Getriebe 9 und Messeinheit 14 bzw. zum Verbinden von Messeinheit 14 und Eindrehwerkzeug 3 eine Kupplung 16 vorgesehen ist. Die Kupplung 16 dient insbesondere zur Drehmomentenübertragung zwischen den einzelnen Bauteilen und ist daher vorzugsweise zwischen den einzelnen Bauteilen angeordnet. Insbesondere kann vorgesehen sein, dass das Eindrehwerkzeug 3 koppelbar mit dem Antriebsstrang verbunden ist. Daher können verschiedene Eindrehwerkzeuge 3 für verschie-

dene Schrauben 4 am selben Prozessschrauber 1 verwendet werden.

Weiters kann vorgesehen sein, dass eine Lagerung 17 ausgebildet ist, welche zur Aufnahme der auftretenden Kräfte dient.

Anhand der Fig. 1 wird nun die allgemeine Funktionsweise des Prozessschraubers 1 erläutert.

Das Eindrehwerkzeug 3 wird mit der Schraube 4 in Eingriff gebracht und die Schraube 4 anschließend in das Gegengewinde 5 eingedreht. In einem ersten Eindrehbereich wird dabei die Schraube 4 leichtgängig in das Gegengewinde 5 eingedreht. Am Ende dieses Eindrehvorganges kommt eine Schulter 18 der Schraube 4 mit dem Bauteil 7 in Kontakt, wodurch sich das Drehmoment zum Eindrehen der Schraube sprungartig erhöht. Anschließend wird das Bauteil 7 von der Schraube 4 zum Aufnahmeobjekt 6 angedrückt, wobei das Drehmoment weiter erhöht wird, bis ein vorbestimmtes Anzugsmoment erreicht ist.

Man kann davon sprechen, dass der Einschraubvorgang der Schraube 4 in zwei Stufen unterteilt ist. Die erste Stufe ist eine Schraubstufe in welcher die Schraube 4 frei in das Gegengewinde 5 eingedreht wird und die Schulter 18 der Schraube 4 nicht am Bauteil 7 anliegt.

Die zweite Stufe ist eine Anziehstufe, in welcher die Schulter 18 der Schraube 4 am Bauteil 7 anliegt und daher ein erhöhtes Drehmoment auf die Schraube 4 aufgebracht werden muss.

In der Schraubstufe kann vorgesehen sein, dass der Elektromotor 2 überlagert geschwindigkeitsgeregelt wird, bis ein externer Schwellwert überschritten wird. In der Anziehstufe ist vorgesehen, dass der Elektromotor 2 momentengeregelt wird.

In der Anziehstufe kann ein vordefiniertes Anziehdrehmoment mithilfe einer kaskadierten Zwei-Freiheitsgrad-Regelung eingestellt werden. Diese kaskadierte Regelung besteht aus einer inneren Geschwindigkeitsregelung, einer überlagerten Momentenregelung und einer entsprechenden modellbasierten Vorsteuerung.

Mithilfe der modellbasierten Vorsteuerung wird eine Drehzahl so vorgegeben, dass der Verlauf des tatsächlich an der Schraube 4 wirkenden externen Moments dem der vorgegebenen Solltrajektorie hinreichend genau folgen kann. Diese Zwei-Freiheitsgrade-Regelung kann außerdem um weitere modellbasierte Vorsteuerungen erweitert werden, mit denen eine Last und/oder Trägheitskompensation erreicht wird. Ist die mechanische Kopplung zwischen Antrieb und Werkzeugaufnahme hinreichend steif, so kann das an der Messeinheit 14 erfasste Drehmoment als direkte Rückführgröße für die Momentenregelung verwendet werden. Ist dies nicht der Fall, dann beinhaltet das an der Messeinheit 14 erfasste Drehmoment in Beschleunigungsphasen Trägheitskräfte zufolge der Trägheit des Eindrehwerkzeuges.

Um diesem Umstand Rechnung zu tragen, werden verschiedene Ablauf- bzw. Regelungsstrategien vorgeschlagen, welche in weiterer Folge noch näher beschrieben werden.

Beispielsweise kann in einer ersten Strategie vorgesehen sein, dass nach dem Auftreten des Drehmomentanstieges aufgrund des Anschlages von der Schulter 18 am Bauteil 7 der Elektromotor auf eine minimale Geschwindigkeit abgebremst wird und diese solange konstant gehalten wird, bis sich das von der Messeinheit 14 erfasste Drehmoment wieder auf den tatsächlich am Eindrehwerkzeug 3 anliegenden Drehmomentwert eingeschwungen hat. Von dieser minimalen Geschwindigkeit ausgehend kommt es beim erneuten Abbremsen nur zu vernachlässigbaren Abweichungen zwischen dem an der Messeinheit 14 erfassten Drehmoment und dem tatsächlich am Eindrehwerkzeug 3 anliegenden Drehmomentwert, womit eine Regelung des Elektromotors 2 auf das Anziehdrehmoment möglich ist.

In einer zweiten Strategie kann vorgesehen sein, dass das tatsächlich am Eindrehwerkzeug 3 anliegende Drehmomentwert mit einem Störgrößenbeobachter geschätzt wird und die Regelung entsprechend auf den Schätzwert erfolgt. Diesem Störgrößenbeobachter liegt ein mathematisches Modell des Prozessschraubers 1 als Simulation zugrunde. Modellunsicherheiten und äußere Störungen können mithilfe einer Ausgangsrückführung kompensiert werden. Der Störgrößenbeobachter nutzt dabei das Soll-Motor-Drehmoment, den gemessenen Motor-Drehwinkel und das an der Messeinheit 14 erfasste Drehmoment zur Rekonstruktion des tatsächlich am Eindrehwerkzeug 3 anliegenden Drehmomentes. Diese geschätzte Lastkraft kann dann als Rückführgröße für die Momentenregelung des Elektromotors 2 verwendet werden.

Die Schwierigkeit bei der Regelung besteht darin, die Prozessgeschwindigkeit hoch und die auftretenden Momente innerhalb vorgegebener Grenzen zu halten. Wird eine ideale, störungsfreie Strecke angenommen, kann ein Motor-Drehzahlverlauf gefunden werden, welcher es ermöglicht, ein gewünschtes Anzugsmoment einzustellen. Im realen Anwendungsfall ist allerdings zusätzlich zu den auftretenden Störungen und dem Messrauschen die Anfangsposition der Schrauben 4 nur grob bekannt und diese variiert zwischen unterschiedlichen Schrauben 4 um bis zu zwei volle Umdrehungen.

Um ein definiertes Anzugsmoment zu erreichen und dabei die Prozessgeschwindigkeit möglichst hoch zu halten, wurden die erfindungsgemäßen Regelungsstrategien entwickelt.

Solange sich die Schraube frei dreht, ist mit keinem wesentlichen Anstieg des tatsächlich am Eindrehwerkzeug 3 anliegenden Drehmomentes zu rechnen. Es ist daher sinnvoll, in dieser Schraubphase ein Motor-Drehzahlprofil ohne zusätzlicher Momentenregelung direkt vorzugeben. Erst wenn die Schulter 18 am Bauteil 7 aufliegt, kommt es zu einem rasanten Anstieg des am Eindrehwerkzeug 3 anliegenden Drehmomentes und die Momentenregelung wird aktiv. In der Schraubstufe wird ein Motor-Drehzahlprofil vorgegeben, bei dem unterschiedliche Geschwindigkeitsniveaus stetig miteinander verbunden werden. Dadurch ist sichergestellt, dass die mechanischen Komponenten des Prozessschraubers 1 nicht unnötig strapaziert werden und die Anregung von Schwingungen im System gering gehalten wird.

Ziel der Regelung ist es, das tatsächlich am Eindrehwerkzeug anliegende Drehmoment so zu regeln, dass es einen definierten Wert, auch als Anzugsdrehmoment bezeichnet, erreicht.

Das tatsächlich am Eindrehwerkzeug 3 anliegende Drehmoment soll mithilfe der Messeinheit 14 gemessen werden und als Rückführungsgröße bei der Regelung dienen. Allerdings ist zu erwähnen, dass das in der Messeinheit 14 gemessene Drehmoment nur dann dem tatsächlich am Eindrehwerkzeug 3 anliegenden Drehmoment entspricht, wenn das Eindrehwerkzeug 3 nicht gerade beschleunigt oder abgebremst wird und daher keine dynamischen Effekte aufgrund der Massenträgheit der einzelnen Bauteile auftreten. Mit anderen Worten ausgedrückt kann das tatsächlich am Eindrehwerkzeug 3 anliegende Drehmoment von der Messeinheit 14 genau gemessen werden, wenn das Eindrehwerkzeug 3 stillsteht oder sich mit einer konstanten Drehgeschwindigkeit bewegt, wobei dieser Zustand auch schon eine gewisse Zeitdauer währen muss, sodass Schwingungen bereits abgeklungen sind.

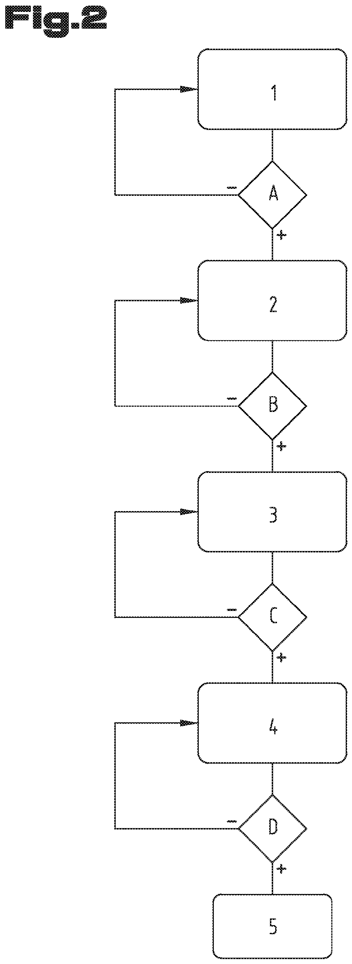

Fig. 2 zeigt ein Ablaufdiagramm eines schematischen Ablaufes der ersten Regelungsstrategie zum Eindrehen der Schraube 4.

An den Entscheidungspfaden steht ein Plus (+) für Bedingung ist erfüllt. Ein Minus (-) steht für Bedingung ist nicht erfüllt.

Im Verfahrensschritt 1 wird die Antriebswelle 11 des Elektromotors 2 auf Maximaldrehzahl beschleunigt. Um den Elektromotor 2 auf Maximaldrehzahl zu beschleunigen kann ein bestimmter zeitlicher Verlauf der Winkelgeschwindigkeit bzw. eine gewisse Beschleunigungsrampe vorgegeben sein anhand welcher der Elektromotor 2 beschleunigt wird. In der Abfrage A wird abgefragt, ob die Antriebswelle 11 des Elektromotors 2 bereits eine vorgegebene Anzahl an Spindelumdrehungen absolviert hat. Der Elektromotor 2 wird solange in Maximaldrehzahl betrieben bis in der Abfrage A ein Erreichen der vorgegebenen Anzahl an Spindelumdrehungen zu einer Erfüllung der Bedingung führt. Die Anzahl der Spindelumdrehungen welche als Trigger zum Wechsel in den Verfahrensschritt 2 dient wird so hoch wie möglich gewählt, jedoch so niedrig gewählt, dass in allen aufgrund der Toleranzen denkbaren Fällen gewährleistet ist, dass die Schulter 18 der Schraube 4 nicht während diesem Verfahrensschritt am Bauteil 7 zum Anliegen kommt. Während dem Verfahrensschritt 1 kann vorgesehen sein, dass das an der Messeinheit 14 gemessene Drehmoment nicht abgefragt wird oder zumindest nicht in die Motorregelung miteinfließt.

Anschließend wird im Verfahrensschritt 2 der Elektromotor 2 mit reduzierter Drehzahl betrieben. Die reduzierte Drehzahl dient dazu, dass bei der Detektion eines Drehmomentenanstiegs in der Messeinheit 14 ausreichend Zeit bleibt, um die Motordrehzahl zu verringern bzw. um auf eine Momentenregelung umzustellen. Die Drehgeschwindigkeit in der reduzierten Drehzahl ist davon abhängig, wie schnell der Elektromotor 2 abgebremst werden kann und welchen Drehwinkel die Schraube 4 nach Aufsetzten der Schraube 4 am Bauteil 7 noch weiter gedreht werden kann. Wenn dieser Drehwinkel beispielsweise sehr groß ist, kann die reduzierte Drehzahl einen hohen Wert aufweisen und annähernd gleich groß wie die Maximaldrehzahl sein.

Der Übergang von Maximaldrehzahl zu reduzierter Drehzahl kann ebenfalls entsprechend einem vorbestimmten zeitlichen Verlauf der Winkelgeschwindigkeit erfolgen. Während des Betreibens des Elektromotors 2 in reduzierter Drehzahl wird die Messeinheit 14 aktiviert, um erfassen zu können, wenn die Schulter 18 der Schraube 4 am Bauteil 7 zum Anliegen kommt, wodurch es zu einem sprungartigen Anstieg des in der Messeinheit 14 detektierten Drehmomentes kommt. In der Abfrage B wird ermittelt, ob das in der Messeinheit 14 detektierte Drehmoment bzw. dessen Gradient oder Gradientenverlauf einen gewissen vordefinierten Schwellenwert erreicht hat und bei Erreichen des Schwellenwertes wird der Verfahrensschritt 3 eingeleitet.

Im Verfahrensschritt 3 wird der Elektromotor 2 in einer minimalen Drehzahl betrieben. Die minimale Drehzahl kann von Prozess zu Prozess unterschiedlich sein und wird aufgrund der aktuellen Prozessparameter vorgegeben. In Extremfällen kann es sogar notwendig sein, dass die minimale Drehzahl gleich Null oder annähern Null ist. Das Abbremsen von reduzierter Drehzahl in minimale Drehzahl sollte im Rahmen der Festigkeitswerte des Prozessschraubers 1 möglichst zügig bzw. abrupt von statten gehen. Im Verfahrensschritt 3 wird der Elektromotor 2 so lange in Minimaldrehzahl betrieben, bis die aufgrund des abrupten Abbremsmanövers auftretenden Schwingungen im Antriebsstrang ausgeklungen sind. Hierzu wird in Abfrage C eine vorberechnete Zeitdauer zum Abklingen der Schwingungen abgefragt.

In einer Alternativvariante kann auch vorgesehen sein, dass die nötige Zeitdauer zum Abklingen der Schwingungen nicht aufgrund eines Modells berechnet wird, sondern dass diese in einem iterativen Verfahren angepasst wird oder dass das Abklingen der Schwingungen durch Erfassen des Motordrehmomentes im Elektromotor 2 im Vergleich mit dem gemessenen Drehmoment in der Messeinheit 14 festgestellt wird.

Wenn die Wartezeit erreicht wird, so wird anschließend im Verfahrensschritt 4 die Momentenregelung aktiviert und die Schraube 4 unter Beobachtung des in der Messeinheit 14 gemessenen Drehmomentes weiter angezogen.

Entsprechend der Abfrage D wird die Schraube so weit angezogen, bis ein vorgegebenes Anzugsdrehmoment erreicht ist. Nach Erreichen dieses Anzugsdrehmomentes wird entsprechend dem Verfahrensschritt 5 der aktuelle Schraubvorgang beendet.

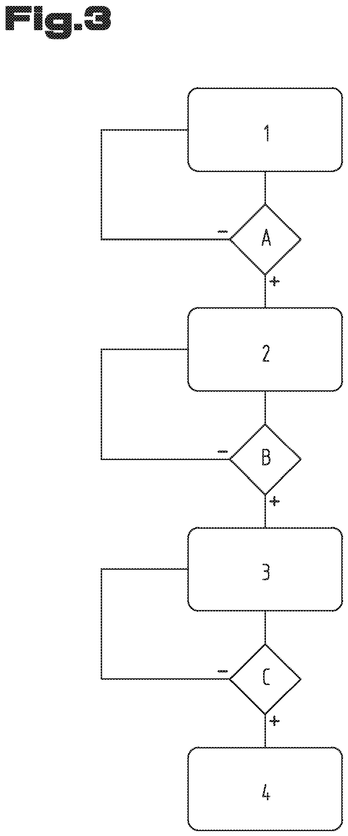

Fig. 3 zeigt ein Ablaufdiagramm eines schematischen Ablaufes einer zweiten Regelungsstrategie zum Eindrehen der Schraube 4, wobei die Verfahrensschritte 1 bis Inclusive der Abfrage B gleich wie bereits in Fig. 2 beschrieben sind. Der kürze halber wird in der Beschreibung zur Fig. 3 daher mit Verfahrensschritt 3 begonnen, welcher sich vom Verfahrensschritt 3 der Fig. 2 unterscheidet.

Im Verfahrensschritt 3 wird eine Trajetorienfolgeregelung mittels Zwei-Freiheitsgrad-Regler aktiviert und die Drehzahl des Elektromotors 2 durch diesen vorgegeben. Die Solltrajektorie wird bei der Regelung mit dem Ausgang des Störgrößenbeobachters verglichen. Das virtuell vorgegebene Drehmoment, auch Solltrajektorie genannt, wird auf Basis eines Modells der Schraube 4 berechnet. In der Modellbetrachtung ist hierbei jedem Drehwinkel der Schraube ein anliegendes Drehmoment zugeordnet. In Abfrage C wird Abgefragt, ob ein Ende der Zeitdauer in welcher die Solltrajektorie herangezogen werden soll erreicht ist. Ist dies der Fall, so wird anschließend im Verfahrensschritt 4 das in der Messeinheit 14 gemessene Drehmoment als Rückführgröße für die Regelung verwendet und die Schraube 4 auf das Anzugsdrehmoment angezogen.

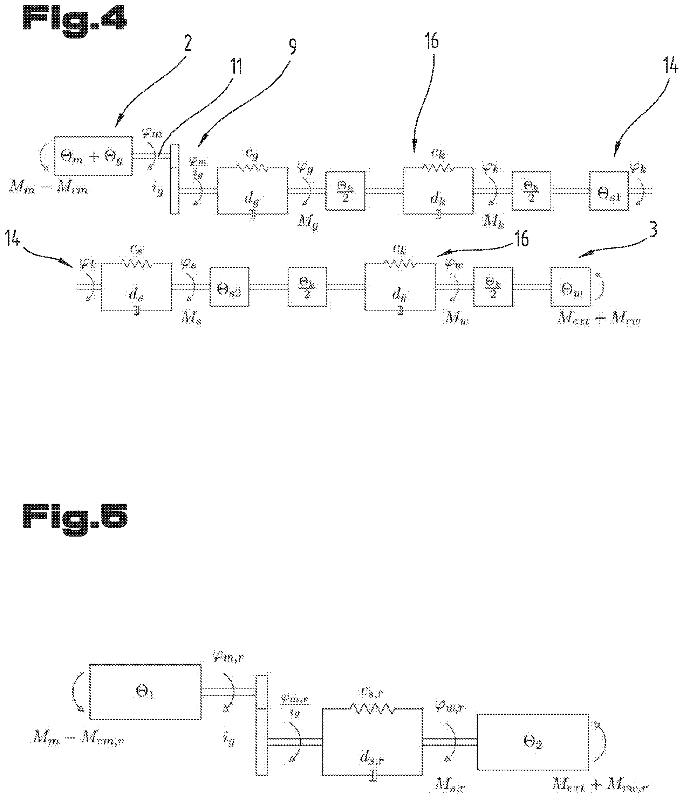

In der Fig. 4 ist ein mechanisches Modell des Schraubers 4 mit dem Getriebe 9 dargestellt, welches als Basis für die mathematische Modellierung des Schraubers 4 dient.

Für die Modellierung werden die Trägheitsmomente gemäß den Datenblättern der Komponenten erfasst und die Übergänge zwischen den einzelnen Komponenten als Feder-Dämpfer-Kombinationen berücksichtigt. Die Werte für die Federkonstanten folgen ebenfalls aus den Datenblättern der verwendeten Komponenten, während die Dämpfungskonstanten empirisch ermittelt werden. Die Eingangsgröße des Modells bildet das Motormoment $M_m$, welchem die Reibungsmomente $M_{rm}$ des Antriebs entgegenwirken. Das Getriebe wird als verlustlos angenommen und als lineares Feder-Masse-Dämpfer-Element modelliert. Das Trägheitsmoment des Getriebes $\Theta_g$ wird gemeinsam mit der Motorträgheit $\Theta_m$ auf der Antriebsseite berücksichtigt. Das antriebsseitige Motormoment $M_m$ wirkt über die das Getriebe 9 um den Getriebefaktor $i_g$ verstärkt, während die Motorwinkelposition $\varphi_m$ abtriebsseitig um den Faktor $1/i_g$ reduziert ist. Die Nachgiebigkeit des Getriebes 9 wird anhand einer linearen Feder mit der Federkonstante $c_g$ und eines linearen Dämpfers mit dem Dämpferkonstanten $d_g$ modelliert. Der Winkel bzw. das Moment zwischen dem Getriebe 9 und der ersten Kupplung 16 werden mit $\varphi_g$ bzw. $M_g$ bezeichnet. Die Trägheitsmomente $\Theta_k$ der Kupplungen 16 werden an- und abtriebsseitig je zur Hälfte berücksichtigt und sind über ein lineares Element mit der Federkonstante $c_k$ und der Dämpferkonstanten $d_k$ miteinander gekoppelt. An der ersten Kupplung 16 wirkt das abtriebsseitige Getriebemoment $M_g$. Das Moment an der Kupplungs-Abtriebsseite wird mit $M_k$ bezeichnet und der zugehörige Drehwinkel mit $\varphi_k$. Analog zu den Kupplungen wird die Messeinheit 14 mit dem Trägheitsmoment $\Theta s_1$ der Antriebsseite und $\Theta s_2$ der Abtriebsseite sowie dem Feder-Dämpfer-Element mit der Federkonstanten cs und der Dämpferkonstanten ds in den Antriebsstrang eingebunden. Die neue Winkelposition und das virtuelle Moment werden mit cps und Ms bezeichnet und liegen an der Antriebsseite der zweiten Kupplung 16 an. Diese Kupplung 16 verbindet den Drehmomentensensor mit der Welle, auf welche das Schraubwerkzeug angebracht ist. Die Welle weist das Trägheitsmoment $\Theta_w$ auf und der Drehwinkel $\varphi_w$ und das Moment $M_w$ sind die Größen, die direkt an der Schraube 4 anliegen. Diesem Moment wirken die durch die Lagerung der Welle verursachten Reibungsverluste Mrw und das externe Moment der Schraube 4 $M_{ext}$ entgegen. Das Trägheitsmoment der Schraube 4 ist aufgrund der geringen Abmessungen gegenüber der Welle samt Werkzeug vernachlässigbar.

Fig. 5 zeigt ein vereinfachtes Modell, wobei für die vereinfachte Struktur angenommen wird, dass die Federkonstanten des Getriebes, der Kupplungen und des Sensors als Reihenschaltung aufgefasst und somit

$$c_{s,r} = \frac{1}{\frac{1}{c_g} + \frac{2}{c_k} + \frac{1}{c_s}}$$

in die Ersatzfederkonstante übergeführt werden können. Der Sensor weist mit cs die geringste Steifigkeit in dieser Serienschaltung auf und bestimmt dadurch die Größe der Ersatzfederkonstante maßgeblich. Die Ersatzreibung $d_{s,r}$ wird empirisch ermittelt. Alle Trägheitsmomente der Sensorantriebsseite werden unter Berücksichtigung der Übersetzung auf die Antriebsseite des Getriebes transformiert und im Trägheitsmoment

$$\theta_1 = \theta_m + \theta_g + \frac{\theta_k + \theta_{s1}}{i_g^2}$$

zusammengefasst. Das Trägheitsmoment der Sensorabtriebsseite ist durch $\theta_2 = \theta_{s2} + \theta_k + \theta_w$ bestimmt. Wie beim detaillierten Modell werden das Motormoment sowie das externe Moment mit Mm und Mext bezeichnet. Die Momente $M_{rm,r}$ und $M_{rw,r}$ geben die aus den Reibungsverlusten des Antriebs und durch die Lagerung resultierenden Momente an.

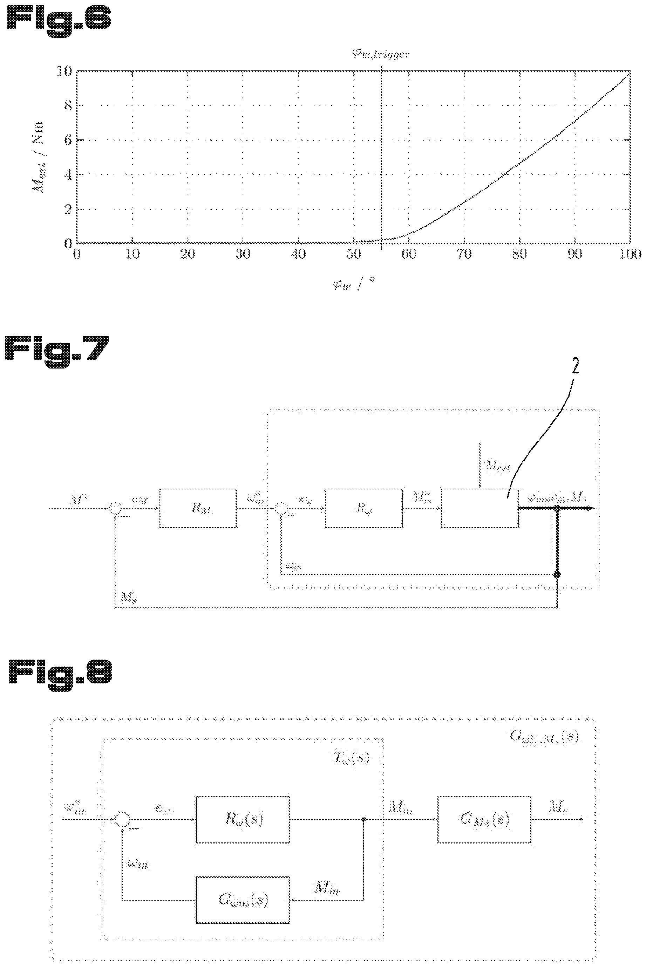

Fig. 6 zeigt einen exemplarischen Verlauf des externen Momentes über den Verlauf des Wellenwinkels $\varphi_w$. Der exemplarische Verlauf des externen Momentes kann durch einen Versuch ermittelt werden. Dieser exemplarische Verlauf wird auch als Lastmodell bezeichnet.

Um ein breites Feld an Schraubanwendungen zu ermöglichen und die Einfachheit der Modellanpassung zu gewährleisten, wird das Lastmodell der spezifischen Anwendungsfälle empirisch ermittelt. Ziel ist es, eine Kennlinie messtechnisch zu erfassen, die den Zusammenhang zwischen dem externen Moment $M_{ext}$ und dem Einschraubwinkel $\varphi_w$ angibt. Dazu wird eine Schraube 4 mit konstanter Drehzahl, entsprechend dem Anwendungsfall, so weit eingeschraubt, bis ein maximales Grenzmoment am Elektromotor 2 erreicht wird. Aufgrund der konstanten Drehzahl stimmt das Messsignal an der Messeinheit 14 mit dem extern wirkenden Moment überein. Die Winkelposition der Welle kann messtechnisch nicht erfasst werden. Deshalb wird aus dem Schrauber-Modell die Übertragungsfunktion vom Motorwinkel $\varphi_m$ auf den Wellenwinkel $\varphi_w$ berechnet und im Frequenzbereich analysiert. Es hat sich gezeigt, dass die Übertragungsfunktion im relevanten Frequenzbereich im Wesentlichen nur durch den Getriebefaktor $i_g$ bestimmt wird und somit die Annahme $\varphi_m = i_g{}^*\varphi_w$ getroffen werden kann. Unter diesen Gegebenheiten kann der Zusammenhang zwischen dem externen Moment $M_{ext}$ und dem Wellenwinkel $\varphi_w$ erfasst werden. Eine so ermittelte Kennlinie ist in Fig. 6 exemplarisch dargestellt. Der Verlauf der Kennlinie entspricht dem einer nichtlinearen Feder $M_{ext}$ = $k(\varphi_w)^*$ $\varphi_w$ mit der winkelabhängigen Steifigkeit $k(\varphi_w)$.

Für den Entwurf der in den Figuren 2 und 3 beschriebenen Schraubstrategien wird der Schraubvorgang in eine Schraubstufe und eine Anziehstufe unterteilt. Die Anziehstufe beginnt beim Überschreiten eines bestimmten Schwellwerts. Bezeichnet ttrigger den Zeitpunkt für den dieses Überschreiten gilt, dann wird mit $t_{trans} = t - t_{trigger}$ eine Zeittransformation definiert. In der Anziehstufe ist der Momentenanstieg wie aus Fig. 6 ersichtlich in erster Näherung konstant.

Fig. 7 zeigt ein Strukturschaltbild eines möglichen Momentenreglers $R_M$ zur Momentenregelung. Der Momentenregler $R_M$ wird aktiv, sobald die Schulter 18 der Schraube 4 am Bauteil 7 aufliegt und die Anziehstufe beginnt. Aufgrund der Annahme eines idealen Motor-Momentenregelkreises kann das Ersatzmodell der Regelstrecke für den überlagerten Momentenregler vereinfacht werden.

Dieses Ersatzmodell setzt sich aus dem Motor-Drehzahlregler und dem Modell des Prozessschraubers 1 zusammen und ist in Fig. 8 im Detail dargestellt. Das Schrauber-Modell wird dabei in zwei separate Übertragungsfunktionen aufgeteilt. Die Übertragungsfunktion $G_{\omega m}(s)$ mit $M_m$ als Eingang und $\omega_m$ als Ausgang bildet die Ausgangsrückführung für den Motor-Drehzahlregler $R_\omega(s)$, während die Übertragungsfunktion $G_{Ms}(s)$ vom Eingang $M_m$ zum Ausgang Ms die Messeinheit 14 abbildet. Die Übertragungsfunktion der gesamten Regelstrecke $G_{\omega_m^*,M_s}(s)$ vom Eingang $\omega_m^*$ zum Ausgang Ms setzt sich somit aus dem geschlossenen Motor-Drehzahlregelkreis $T_\omega(s) = \frac{R_\omega(s)}{1+R_\omega(s)G_{\omega m}(s)}$ und der Sensorübertragungsfunktion $G_{Ms(s)}$ zusammen und lässt sich zu $G_{\omega_m^*,M_s}(s) = \frac{R_\omega(s)}{1+R_\omega(s)G_{\omega m}(s)}G_{Ms}(s)$ bestimmen.

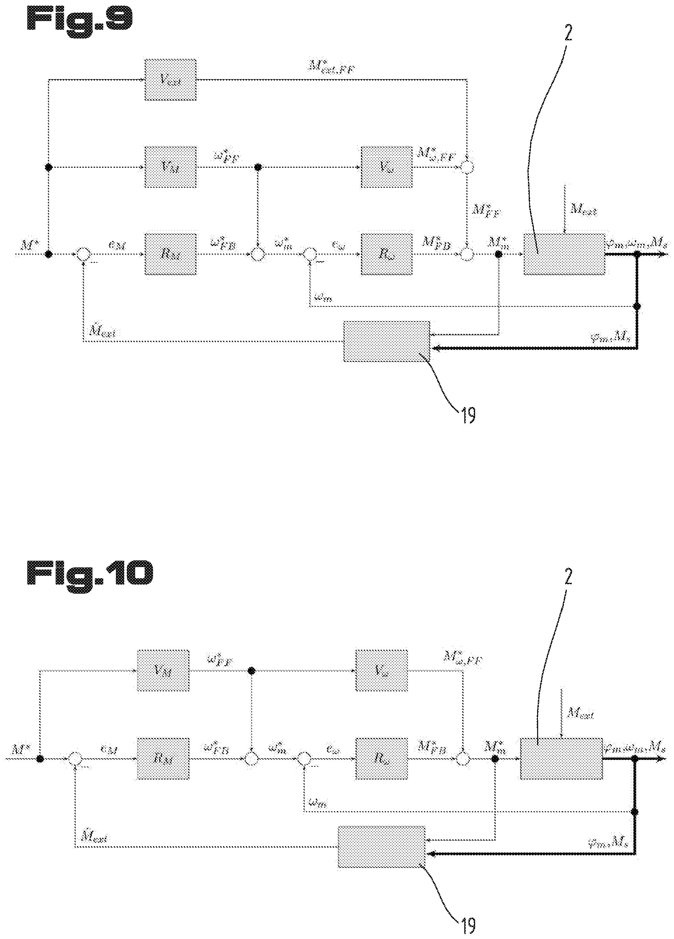

In den Figuren 9 bis 15 sind verschiedene Strukturschaltbilder von möglichen Regelkreisen zur Momentenregelung gezeigt, wobei alle Figuren auf der Figur 7 aufbauen. Um unnötige Wiederholungen zu vermeiden wird auf die Figur 7 bzw. die jeweils vorangegangenen Figuren Bezug genommen.

In dem Ausführungsbeispiel nach Fig. 9 dient als Eingangsgröße für den Momentenregler $R_M$ nicht das Sensorsignal Ms, wie dies in Fig. 7 der Fall ist, sondern wird als Eingangsgröße für den Momentenregler $R_M$ von einem Störgrößenbeobachter 19 ein geschätztes Moment $\hat{M}_{ext}$ bereitgestellt. Weiters sind eine Momentenvorsteuerung $V_M$, eine Lastvorsteuerung Vext und eine Trägheitskompensation $V_\omega$ vorgesehen.

In dem Ausführungsbeispiel nach Fig. 10 dient als Eingangsgröße für den Momentenregler $R_M$ ein vom Störgrößenbeobachter 19 geschätztes Moment $\hat{M}_{ext}$. Weiters sind eine Momentenvorsteuerung $V_M$ und eine Trägheitskompensation $V_\omega$ vorgesehen.

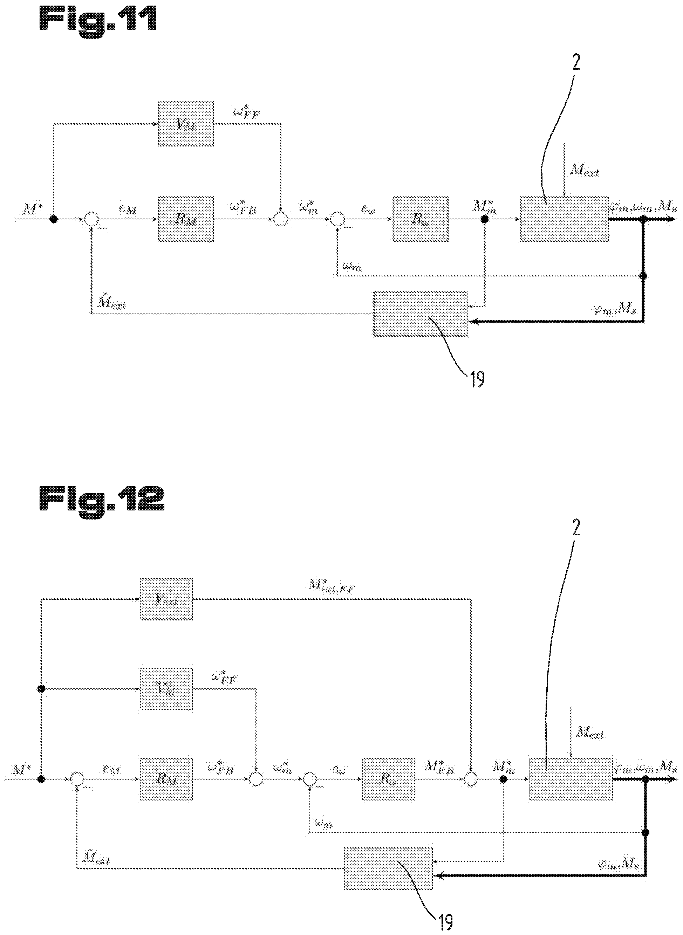

In dem Ausführungsbeispiel nach Fig. 11 dient als Eingangsgröße für den Momentenregler $R_M$ ein vom Störgrößenbeobachter 19 geschätztes Moment $\hat{M}_{ext}$. Weiters ist eine Momentenvorsteuerung $V_M$ vorgesehen.

In dem Ausführungsbeispiel nach Fig. 12 dient als Eingangsgröße für den Momentenregler $R_M$ ein vom Störgrößenbeobachter 19 geschätztes Moment $\hat{M}_{ext}$. Weiters sind eine Momentenvorsteuerung $V_M$ und eine Lastvorsteuerung Vext vorgesehen.

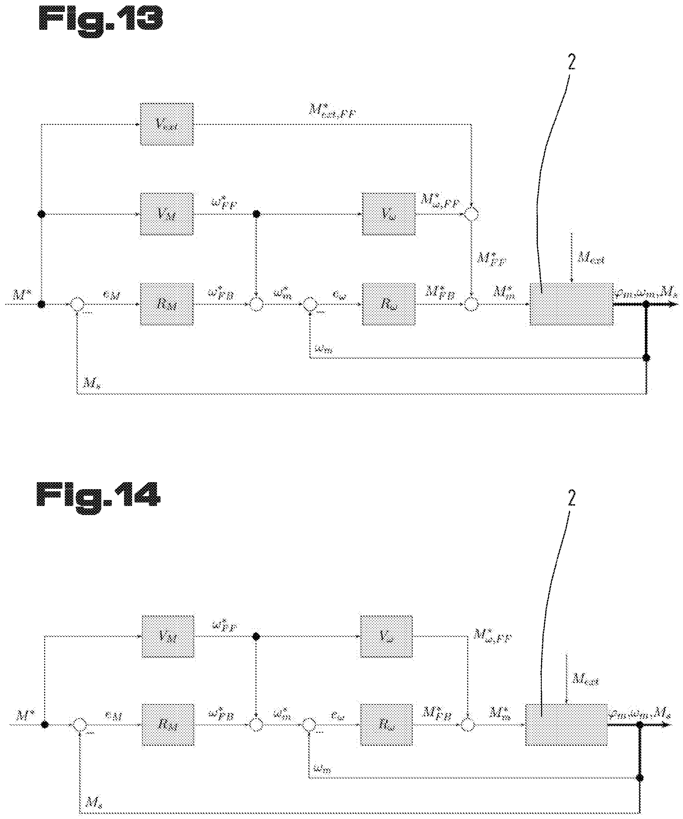

In dem Ausführungsbeispiel nach Fig. 13 dient als Eingangsgröße für den Momentenregler $R_M$ das Sensorsignal Ms. Weiters sind eine Momentenvorsteuerung $V_M$, eine Lastvorsteuerung $V_{ext}$ und eine Trägheitskompensation $V_\omega$ vorgesehen.

In dem Ausführungsbeispiel nach Fig. 14 dient als Eingangsgröße für den Momentenregler $R_M$ das Sensorsignal Ms. Weiters sind eine Momentenvorsteuerung $V_M$ und eine Trägheitskompensation $V_\omega$ vorgesehen.

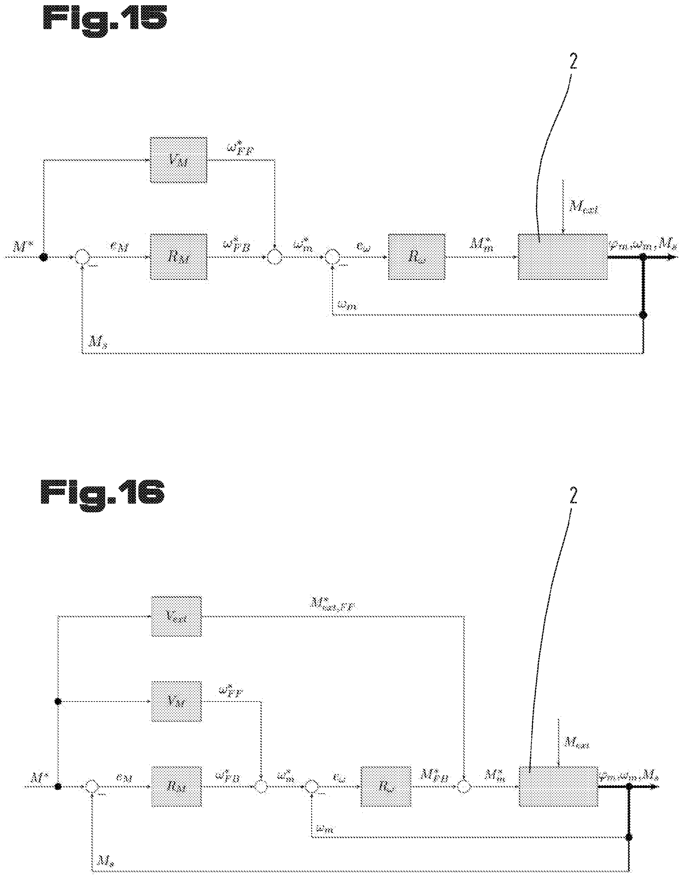

In dem Ausführungsbeispiel nach Fig. 15 dient als Eingangsgröße für den Momentenregler $R_M$ das Sensorsignal Ms. Weiters ist eine Momentenvorsteuerung $V_M$ vorgesehen.

In dem Ausführungsbeispiel nach Fig. 16 dient als Eingangsgröße für den Momentenregler $R_M$ das Sensorsignal Ms. Weiters sind eine Momentenvorsteuerung $V_M$ und eine Lastvorsteuerung Vext vorgesehen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

1 Prozessschrauber
2 Elektromotor
3 Eindrehwerkzeug
4 Schraube
5 Gegengewinde
6 Aufnahmeobjekt
7 Bauteil
8 Regelung
9 Getriebe
10 Getriebeeingang
11 Antriebswelle
12 Getriebeausgangswelle
13 Getriebeausgang
14 Messeinheit
15 Zudrehrichtung
16 Kupplung
17 Lagerung
18 Schulter
19 Störgrößenbeobachter

**Patentansprüche**

1. Verfahren zum Eindrehen einer Schraube (4) oder Mutter mit einem vorbestimmten Anzugsdrehmoment mittels einem Eindrehwerkzeug (3), welches mit einem Elektromotor (2) gekoppelt ist, welcher von einer Regelung (8) angesteuert wird, wobei das Verfahren folgende Verfahrensschritte umfasst:

   - Herstellen einer Drehmomentenübertragenden Verbindung zwischen Eindrehwerkzeug (3) und Schraube (4) oder Mutter;
   - Beschleunigen des Elektromotors (2) in Zudrehrichtung (15) auf eine vorgegebene Maximaldrehzahl;
   - Betreiben des Elektromotors (2) in Maximaldrehzahl bis eine Antriebswelle (11) des Elektromotors (2) eine vorgegebene Anzahl an Spindelumdrehungen absolviert hat, wobei während diesem Verfahrensschritt die Schraube (4) oder Mutter frei in das jeweilige Gegengewinde (5) eingedreht wird, oder das Gegengewinde (5) mittels der Schraube (4) geschnitten wird;
   - Reduzieren der Drehzahl des Elektromotors (2) auf eine vorbestimmte reduzierte Drehzahl;
   - Betreiben des Elektromotors (2) in reduzierter Drehzahl bis ein Drehmomentenanstieg detektiert wird, welcher einen vorbestimmten Schwellenwert überschreitet, wobei der Drehmomentenanstieg dann auftritt, wenn die Schraube (4) oder Mutter mit deren Schulter (18) am zu befestigenden Bauteil (7) zum Anliegen kommt;
   - Nachdrehen der Schraube (4) oder Mutter bis das vorbestimmte Anzugsdrehmoment erreicht ist,

   **dadurch gekennzeichnet, dass**
   der Drehmomentenanstieg von einer dem Elektromotor (2) nachgeschalteten Messeinheit (14) detektiert wird
   und dass direkt nach der Detektion des Drehmomentenanstieges die weitere Ansteuerung des Elektromotors (2) von der Regelung (8) auf Basis eines Drehmomentwertes vorgegeben wird, wobei nach der Detektion des Drehmomentenanstieges der Elektromotor (2) auf eine vorbestimmte Minimaldrehzahl abgebremst wird und in einer Anfangsperiode während des Abbremsvorganges das in der Messeinheit (14) erfasste Drehmoment von einem auf einer Modellrechnung basierten Solltrajektorie-Drehmoment überblendet wird und nach der Anfangsperiode das von der Messeinheit (14) detektierte Drehmoment als Eingangsgröße für die Regelung (8) dient.

2. Verfahren nach Anspruch 1 oder 2, **dadurch gekennzeichnet, dass** nach der Detektion des Drehmomentenanstieges der Elektromotor (2) auf eine vorbestimmte Minimaldrehzahl abgebremst wird.

3. Verfahren nach Anspruch 3, **dadurch gekennzeichnet, dass** der Elektromotor (2) eine vorbestimmte oder vorbestimmbare Zeitdauer in Minimaldrehzahl betrieben wird, bis Schwingungen, welche im Antriebssystem aufgrund des Abbremsvorganges von der reduzierten Drehzahl in die Minimaldrehzahl auftreten, weitestgehend ausgeklungen sind.

4. Verfahren nach einem der vorhergehenden Ansprüche, **dadurch gekennzeichnet, dass** die reduzierte Drehzahl zwischen 0,1% und 99%, insbesondere zwischen 0,5% und 99%, bevorzugt zwischen 50% und 80% der Maximaldrehzahl beträgt.

5. Verfahren nach einem der vorhergehenden Ansprüche, **dadurch gekennzeichnet, dass** direkt nach der Detektion des Drehmomentenanstieges die weitere Ansteuerung des Elektromotors (2) von der Regelung (8) auf Basis einer Solltrajektorie des Drehmomentwertes vorgegeben wird, wobei der Drehzahlverlauf in einer Vorsteuerung aus der Solltrajektorie des Drehmomentwertes berechnet wird.

6. Verfahren nach Anspruch 5, **dadurch gekennzeichnet, dass** in einer ersten Phase nach der Detektion des Drehmomentenanstieges der Drehmomentwert mittels einem Störgrößenbeobachter (19) geschätzt wird und dass in einer zweiten Phase nach der Detektion des Drehmomentenanstieges das Drehmoment direkt von der Messeinheit (14) detektiert wird und als Eingangsgröße für die Regelung (8) dient.

7. Verfahren nach einem der vorhergehenden Ansprüche, **dadurch gekennzeichnet, dass** der Übergang zwischen verschiedenen Drehzahlen der einzelnen Verfahrensschritte derart vorgegeben wird, dass keine sprungartigen Anstiege der Beschleunigung auftreten.

8. Verfahren nach einem der Ansprüche 1 bis 7, **dadurch gekennzeichnet, dass** in der Modellrechnung des Prozessschraubers 1 die Massenträgheit und/oder die Federsteifigkeit und/oder die Dämpfung und die Winkelbeschleunigungen der einzelnen im Antriebsstrang verbauten Bauteile (7) berücksichtigt wird.

9. Verfahren nach einem der Ansprüche 1 oder 8, **dadurch gekennzeichnet, dass** die Modellrechnung auf Basis der jeweils vorhergehenden Zyklen in einem iterativen Lernprozess angepasst wird, wobei zur Anpassung der Modellrechnung der Zeitliche Verlauf des Messwertes des Drehmomentes in der Messeinheit (14), sowie des Motormomentes und des zugehörigen Drehwinkels der Antriebswelle (11) im Elektromotor (2) herangezogen wird.

10. Verfahren nach einem der Ansprüche 1 oder 5, **dadurch gekennzeichnet, dass** zur Überblendung von Modellrechnung und in der Messeinheit (14) detektiertem Drehmoment ein Störgrößenbeobachter (19), insbesondere ein Kalman-Filter, eingesetzt wird.

11. Verfahren nach Anspruch 10 dadurch gezeichnet, dass eine Überblendung zwischen dem im Störgrößenbeobachter (19) geschätzten tatsächlich an der Schraube (4) wirkenden Moment und dem in der Messeinheit (14) erfassten Drehmoment durchgeführt wird.

12. Verfahren nach einem der vorhergehenden Ansprüche, **dadurch gekennzeichnet, dass** zwischen Elektromotor (2) und Eindrehwerkzeug (3) ein Getriebe (9) angeordnet ist, mittels welchem die Drehzahl bzw. das Drehmoment zwischen Elektromotor (2) und Eindrehwerkzeug (3) übersetzt wird.

13. Verfahren nach einem der vorhergehenden Ansprüche, **dadurch gekennzeichnet, dass** die Trajektorienplanung anhand eines Lastenmodells erfolgt, welches empirisch ermittelt wird.

14. Verfahren zum Eindrehen einer Schraube (4) oder Mutter mit einem vorbestimmten Anzugsdrehmoment mittels einem Eindrehwerkzeug (3), welches mit einem Elektromotor (2) gekoppelt ist, welcher von einer Regelung (8) angesteuert wird, wobei das Verfahren folgende Verfahrensschritte umfasst:

   - Herstellen einer Drehmomentenübertragenden Verbindung zwischen Eindrehwerkzeug (3) und Schraube (4) oder Mutter;
   - Beschleunigen des Elektromotors (2) in Zudrehrichtung (15) auf eine vorgegebene Maximaldrehzahl;
   - Betreiben des Elektromotors (2) in Maximaldrehzahl bis eine Antriebswelle (11) des Elektromotors (2) eine vorgegebene Anzahl an Spindelumdrehungen absolviert hat, wobei während diesem Verfahrensschritt die Schraube (4) oder Mutter frei in das jeweilige Gegengewinde (5) eingedreht wird, oder das Gegengewinde (5) mittels der Schraube (4) geschnitten wird;
   - Reduzieren der Drehzahl des Elektromotors (2) auf eine vorbestimmte reduzierte Drehzahl;
   - Betreiben des Elektromotors (2) in reduzierter Drehzahl bis ein Drehmomentenanstieg detektiert wird, welcher einen vorbestimmten Schwellenwert überschreitet, wobei der Drehmomentenanstieg dann auftritt, wenn die Schraube (4) oder Mutter mit deren Schulter (18) am zu befestigenden Bauteil (7) zum Anliegen kommt;
   - Nachdrehen der Schraube (4) oder Mutter bis das vorbestimmte Anzugsdrehmoment erreicht ist,

   **dadurch gekennzeichnet, dass**
   der Drehmomentenanstieg von einer dem Elektromotor (2) nachgeschalteten Messeinheit (14) detektiert wird
   und dass nach der Detektion des Drehmomentenanstieges der Elektromotor (2) auf eine vorbestimmte Minimaldrehzahl abgebremst wird, wobei der Elektromotor (2) eine vorbestimmte oder vorbestimmbare Zeitdauer in Minimaldrehzahl betrieben wird, bis Schwingungen, welche im Antriebssystem aufgrund des Abbremsvorganges von der reduzierten Drehzahl in die Minimaldrehzahl auftreten, weitestgehend ausgeklungen sind und nach Ablauf der vorbestimmten Zeitdauer in welcher der Elektromotor (2) in Minimaldrehzahl betrieben wird, die weitere Ansteuerung des Elektromotors (2) von der Regelung (8) auf Basis des in der Messeinheit (14) gemessenen Drehmomentes vorgegeben wird.

15. Verfahren zum Eindrehen einer Schraube (4) oder Mutter mit einem vorbestimmten Anzugsdrehmoment mittels einem Eindrehwerkzeug (3), welches mit einem Elektromotor (2) gekoppelt ist, welcher von einer Regelung (8) angesteuert wird, wobei das Verfahren folgende Verfahrensschritte umfasst:

- Herstellen einer Drehmomentenübertragenden Verbindung zwischen Eindrehwerkzeug (3) und Schraube (4) oder Mutter;
- Beschleunigen des Elektromotors (2) in Zudrehrichtung (15) auf eine vorgegebene Maximaldrehzahl;
- Betreiben des Elektromotors (2) in Maximaldrehzahl bis eine Antriebswelle (11) des Elektromotors (2) eine vorgegebene Anzahl an Spindelumdrehungen absolviert hat, wobei während diesem Verfahrensschritt die Schraube (4) oder Mutter frei in das jeweilige Gegengewinde (5) eingedreht wird, oder das Gegengewinde (5) mittels der Schraube (4) geschnitten wird;
- Reduzieren der Drehzahl des Elektromotors (2) auf eine vorbestimmte reduzierte Drehzahl;
- Betreiben des Elektromotors (2) in reduzierter Drehzahl bis ein Drehmomentenanstieg detektiert wird, welcher einen vorbestimmten Schwellenwert überschreitet, wobei der Drehmomentenanstieg dann auftritt, wenn die Schraube (4) oder Mutter mit deren Schulter (18) am zu befestigenden Bauteil (7) zum Anliegen kommt;
- Nachdrehen der Schraube (4) oder Mutter bis das vorbestimmte Anzugsdrehmoment erreicht ist,

**dadurch gekennzeichnet, dass**
der Drehmomentenanstieg von einer dem Elektromotor (2) nachgeschalteten Messeinheit (14) detektiert wird,
und dass direkt nach der Detektion des Drehmomentenanstieges die weitere Ansteuerung des Elektromotors (2) von der Regelung (8) auf Basis einer Solltrajektorie des Drehmomentwertes vorgegeben wird, wobei der Drehzahlverlauf in einer Vorsteuerung aus der Solltrajektorie des Drehmomentwertes berechnet wird, wobei in einer ersten Phase nach der Detektion des Drehmomentenanstieges der Drehmomentwert mittels einem Störgrößenbeobachter (19) geschätzt wird und dass in einer zweiten Phase nach der Detektion des Drehmomentenanstieges das Drehmoment direkt von der Messeinheit (14) detektiert wird und als Eingangsgröße für die Regelung (8) dient.

**Claims**

1. A method for driving a screw (4) or nut with a predetermined tightening torque by means of a screwdriving tool (3), which is coupled with an electric motor (2), which is controlled by a closed loop controller (8), wherein the method comprises the following method steps:

- establishment of a torque-transmitting connection between screwdriving tool (3) and screw (4) or nut;
- acceleration of the electric motor (2) in screwing-in direction (15) to a predetermined maximum rotational speed,
- operation of the electric motor (2) at maximum rotational speed until a drive shaft (11) of the electric motor (2) has completed a specified number of spindle revolutions, wherein the screw (4) or nut is being driven freely into the respective mating thread (5) during this method step or the mating thread (5) is being cut by means of the screw (4);
- reduction of the rotational speed of the electric motor (2) to a predetermined reduced rotational speed;
- operation of the electric motor (2) at reduced rotational speed until a torque increase that exceeds a predetermined threshold value is detected, wherein the torque increase occurs when the screw (4) or nut comes into contact with its shoulder (18) on the structural part (7) to be fastened;
- subsequent turning of the screw (4) or nut until the predetermined tightening torque is reached,

**characterized in that**
the torque increase is detected by a measuring unit (14) connected downstream from the electric motor (2)
and that directly after the detection of the torque increase, the further activation of the electric motor (2) by the closed loop controller (8) is specified on the basis of a torque value, wherein the electric motor (2) is braked to a predetermined minimum rotational speed after the detection of the torque increase and, in an initial period during the braking process, the torque sensed in the measuring unit (14) is cross-faded by a target-trajectory torque based on a model calculation and, after the initial period, the torque detected by the measuring unit (14) is used as the input variable for the closed loop controller (8).

2. The method according to claim 1 or 2, **characterized in that** the electric motor (2) is braked to a predetermined minimum rotational speed after the detection of the torque increase.

3. The method according to claim 3, **characterized in that** the electric motor (2) is operated at minimum rotational speed for a predetermined or predeterminable time period, until vibrations that occur in the drive system due to the process of braking from the reduced rotational speed to the minimum rotational speed have largely died away.

4. The method according to one of the preceding claims, **characterized in that** the reduced rotational speed amounts to between 0.1% and 99%, in particular between 0.5% and 99%, preferably between 50% and 80% of the maximum rotational speed.

5. The method according to one of the preceding claims, **characterized in that**, directly after the detection of the torque increase, the further activation of the electric motor (2) is specified by the closed loop controller (8) on the basis of a target trajectory of the torque value, wherein the rotational speed variation is calculated from the target trajectory of the torque value in a pilot control.

6. The method according to claim 5, **characterized in that**, in a first phase after the detection of the torque increase, the torque value is estimated by means of a disturbance-variable monitor (19) and, in a second phase after detection of the torque increase, the torque value is detected directly by the measuring unit (14) and used as the input variable for the closed loop controller (8).

7. The method according to one of the preceding claims, **characterized in that** the transition between various rotational speeds of the individual method steps is specified in such a way that no sudden increases of the acceleration occur.

8. The method according to one of claims 1 to 7, **characterized in that**, in the model calculation of the process screwdriver 1, the mass inertia and/or the spring stiffness and/or the damping and the angular accelerations of the individual structural parts (7) built into the drive train are taken into consideration.

9. The method according to one of claims 1 or 8, **characterized in that** the model calculation is adapted on the basis of the respective preceding cycles in an iterative learning process, wherein the time variation of the measured value of the torque in the measuring unit (14) as well as of the motor torque and of the associated angle of rotation of the drive shaft (11) in the electric motor (2) is used for adaptation of the model calculation.

10. The method according to one of claims 1 or 5, **characterized in that** a disturbance-value monitor (19), especially a Kalman filter, is used for cross-fading of model calculation and torque detected in the measuring unit (14).

11. The method according to claim 10, **characterized in that** a cross-fading takes place between the torque, estimated in the disturbance-variable monitor (19), actually acting on the screw (4), and the torque sensed in the measuring unit (14).

12. The method according to one of the preceding claims, **characterized in that** a gearbox (9), by means of which the rotational speed and/or the torque between the electric motor (2) and the screwdriving tool (3) is transmitted, is disposed between the electric motor (2) and the screwdriving tool (3).

13. The method according to one of the preceding claims, **characterized in that** the trajectory planning takes place on the basis of a load model, which is determined empirically.

14. A method for driving a screw (4) or nut with a predetermined tightening torque by means of a screwdriving tool (3), which is coupled with an electric motor (2), which is controlled by a closed loop controller (8), wherein the method comprises the following method steps:

   - establishment of a torque-transmitting connection between screwdriving tool (3) and screw (4) or nut;
   - acceleration of the electric motor (2) in screwing-in direction (15) to a predetermined maximum rotational speed,
   - operation of the electric motor (2) at maximum rotational speed until a drive shaft (11) of the electric motor (2) has completed a specified number of spindle revolutions, wherein the screw (4) or nut is being driven freely into the respective mating thread (5) during this method step or the mating thread (5) is being cut by means of the screw (4);
   - reduction of the rotational speed of the electric motor (2) to a predetermined reduced rotational speed;
   - operation of the electric motor (2) at reduced rotational speed until a torque increase that exceeds a predetermined threshold value is detected, wherein the torque increase occurs when the screw (4) or nut comes into contact with its shoulder (18) on the structural part (7) to be fastened;
   - subsequent turning of the screw (4) or nut until the predetermined tightening torque is reached,

**characterized in that**
the torque increase is detected by a measuring unit (14) connected downstream from the electric motor (2)

and that the electric motor (2) is braked to a predetermined minimum rotational speed after the detection of the torque increase, wherein the electric motor (2) is operated at minimum rotational speed for a predetermined or predeterminable time period, until vibrations that occur in the drive system due to the process of braking from the reduced rotational speed to the minimum rotational speed have largely died away and, after passage of the predetermined time period during which the electric motor (2) is operated at minimum speed, the further activation of the electric motor (2) is specified by the closed loop controller (8) on the basis of the torque measured in the measuring unit (14).

15. A method for driving a screw (4) or nut with a predetermined tightening torque by means of a screwdriving tool (3), which is coupled with an electric motor (2), which is controlled by a closed loop controller (8), wherein the method comprises the following method steps:

- establishment of a torque-transmitting connection between screwdriving tool (3) and screw (4) or nut;
- acceleration of the electric motor (2) in screwing-in direction (15) to a predetermined maximum rotational speed,
- operation of the electric motor (2) at maximum rotational speed until a drive shaft (11) of the electric motor (2) has completed a specified number of spindle revolutions, wherein the screw (4) or nut is being driven freely into the respective mating thread (5) during this method step or the mating thread (5) is being cut by means of the screw (4);
- reduction of the rotational speed of the electric motor (2) to a predetermined reduced rotational speed;
- operation of the electric motor (2) at reduced rotational speed until a torque increase that exceeds a predetermined threshold value is detected, wherein the torque increase occurs when the screw (4) or nut comes into contact with its shoulder (18) on the structural part (7) to be fastened;
- subsequent turning of the screw (4) or nut until the predetermined tightening torque is reached,

**characterized in that**
the torque increase is detected by a measuring unit (14) connected downstream from the electric motor (2)

and that, directly after the detection of the torque increase, the further activation of the electric motor (2) is specified by the closed loop controller (8) on the basis of a target trajectory of the torque value, wherein the rotational speed variation is calculated from the target trajectory of the torque value in a pilot control, wherein, in a first phase after the detection of the torque increase, the torque value is estimated by means of a disturbance-variable monitor (19) and, in a second phase after detection of the torque increase, the torque value is detected directly by the measuring unit (14) and used as the input variable for the closed loop controller (8).

**Revendications**

1. Procédé pour la vissage d'une vis (4) ou d'un écrou avec un couple de serrage prédéterminé au moyen d'un outil de vissage (3) qui est couplé avec un moteur électrique (2) qui est contrôlé par une régulation (8), ce procédé comprenant les étapes suivantes :

- établissement d'une liaison de transmission du couple entre l'outil de vissage (3) et la vis (4) ou l'écrou ;
- accélération du moteur électrique (2) dans la direction de serrage (15) à une vitesse de rotation maximale prédéterminée ;
- fonctionnement du moteur électrique (2) à la vitesse de rotation maximale jusqu'à ce qu'un arbre d'entraînement (11) du moteur électrique (2) ait effectué un nombre prédéterminé de tours de broche, moyennant quoi, pendant cette étape, la vis (4) ou l'écrou est vissé librement dans le contre-filetage (5) correspondant ou le contre-filetage (5) est découpé au moyen de la vis (4) ;
- réduction de la vitesse de rotation du moteur électrique (2) à une vitesse de rotation réduite prédéterminée ;
- fonctionnement du moteur électrique (2) à vitesse de rotation réduite jusqu'à ce qu'une augmentation du couple soit détectée, qui dépasse une valeur seuil prédéterminée, l'augmentation du couple ayant alors lieu lorsque la vis (4) ou l'écrou vient en appui, avec son épaulement (18), contre le composant (7) à fixer ;
- resserrage de la vis (4) ou de l'écrou jusqu'à ce que le couple de serrage prédéterminé soit atteint,

**caractérisé en ce que**
l'augmentation du couple est détectée par une unité de mesure (14) branchée en amont du moteur électrique (2)

et immédiatement après la détection de l'augmentation du couple, le contrôle ultérieur du moteur électrique (2) est prédéterminé par la régulation (8) sur la base d'une valeur de couple, moyennant quoi, après la détection de l'augmentation du couple, le moteur électrique (2) est freiné jusqu'à une vitesse de rotation minimale prédéterminée et, dans une période initiale, pendant le processus de freinage, le couple mesuré dans l'unité de mesure (14) est remplacé par un couple de trajectoire de consigne basé sur un calcul de modélisation et, après la période initiale, le couple détecté par l'unité de mesure (14) sert de grandeur d'entrée pour la régulation (8).

2. Procédé selon la revendication 1 ou 2, **caractérisé en ce que**, après la détection de l'augmentation du couple, le moteur électrique (2) est freiné jusqu'à une vitesse de rotation minimale prédéterminée.

3. Procédé selon la revendication 3, **caractérisé en ce que** le moteur électrique (2) fonctionne pendant une durée prédéterminée ou pouvant être prédéterminée à une vitesse de rotation minimale jusqu'à ce que les vibrations qui apparaissent dans le système d'entraînement du fait du processus de freinage de la vitesse de rotation réduite à la vitesse de rotation minimale soient largement amorties.

4. Procédé selon l'une des revendications précédentes, **caractérisé en ce que** la vitesse de rotation réduite représente entre 0,1 % et 99 %, plus particulièrement entre 0,5 % et 99 %, de préférence entre 50 % et 80 % de la vitesse de rotation maximale.

5. Procédé selon l'une des revendications précédentes, **caractérisé en ce que**, immédiatement après la détection de l'augmentation du couple, le contrôle ultérieur du moteur électrique (2) est prédéterminée par la régulation (8) sur le base d'une trajectoire de consigne de la valeur du couple, le tracé de la vitesse de rotation étant calculé dans un pré-contrôle à partir de la trajectoire de consigne de la valeur du couple.

6. Procédé selon la revendication 5, **caractérisé en ce que**, dans une première phase, après la détection de l'augmentation du couple, la valeur du couple est estimée au moyen d'un observateur de grandeur de perturbation (19) et **en ce que**, dans une deuxième phase, après la détection de l'augmentation du couple, le couple est détecté directement par l'unité de mesure (14) et sert de grandeur d'entrée pour la régulation (8).

7. Procédé selon l'une des revendications précédentes, **caractérisé en ce que** la transition entre les différentes vitesses de rotation des différentes étapes est prédéterminée de façon à ne provoquer aucune augmentation brusque de l'accélération.

8. Procédé selon l'une des revendications 1 à 7, **caractérisé en ce que**, dans le calcul de modélisation de la visseuse (1), l'inertie de masse et/ou la rigidité de ressort et/ou l'amortissement et les accélérations angulaires des différents composants (7) disposés dans la chaîne d'entraînement sont pris en compte.

9. Procédé selon l'une des revendications 1 ou 8, **caractérisé en ce que** le calcul de modélisation est adapté, sur la base des cycles précédents, dans un processus d'apprentissage itératif, moyennant quoi, pour l'adaptation du calcul de modélisation, le tracé de la valeur de mesure du couple en fonction du temps dans l'unité de mesure (14) ainsi que du couple du moteur et de l'angle de rotation correspondant de l'arbre d'entraînement (11) dans le moteur électrique (2) sont utilisés.

10. Procédé selon l'une des revendications 1 ou 5, **caractérisé en ce que**, pour le remplacement du calcul de modélisation et du couple détecté dans l'unité de mesure (14), un observateur de grandeur de perturbation (19), plus particulièrement un filtre de Kalman, est utilisé.

11. Procédé selon la revendication 10, **caractérisé en ce qu'**un remplacement est effectué entre le couple estimé dans l'observateur de grandeur de perturbation (19) et agissant effectivement sur la vis (4) et le couple mesuré dans l'unité de mesure (14).

12. Procédé selon l'une des revendications précédentes, **caractérisé en ce que**, entre le moteur électrique (2) et l'outil de vissage (3) est disposée une transmission (9) au moyen de laquelle la vitesse de rotation ou le couple est démultiplié entre le le moteur électrique (2) et l'outil de vissage (3).

13. Procédé selon l'une des revendications précédentes, **caractérisé en ce que** la planification de trajectoire a lieu à l'aide d'un modèle de charge qui est déterminé de manière empirique.

14. Procédé de rotation d'une vis (4) ou d'un écrou avec un couple de serrage prédéterminé au moyen d'un outil de vissage (3) qui est couplé avec un moteur électrique (2) qui est contrôlé par une régulation (8), ce procédé comprenant les étapes suivantes :

- établissement d'une liaison de transmission du couple entre l'outil de vissage (3) et la vis (4) ou l'écrou ;
- accélération du moteur électrique (2) dans la direction de serrage (15) à une vitesse de rotation maximale prédéterminée ;
- fonctionnement du moteur électrique (2) à la vitesse de rotation maximale jusqu'à ce qu'un arbre d'entraînement (11) du moteur électrique (2) ait effectué un nombre prédéterminé de tours de broche, moyennant quoi, pendant cette étape, la vis (4) ou l'écrou est vissé librement dans le contre-filetage (5) correspondant ou le contre-filetage (5) est découpé au moyen de la vis (4) ;
- réduction de la vitesse de rotation du moteur électrique (2) à une vitesse de rotation réduite prédéterminée ;
- fonctionnement du moteur électrique (2) à vitesse de rotation réduite jusqu'à ce qu'une augmentation du couple soit détectée, qui dépasse une valeur seuil prédéterminée, l'augmentation du couple ayant alors lieu lorsque la vis (4) ou l'écrou vient en appui, avec son épaulement (18), contre le composant (7) à fixer ;
- resserrage de la vis (4) ou de l'écrou jusqu'à ce que le couple de serrage prédéterminé soit atteint,

**caractérisé en ce que**
l'augmentation du couple est détectée par une unité de mesure (14) branchée en amont du moteur électrique (2)
et immédiatement après la détection de l'augmentation du couple, le moteur électrique (2) est freiné à une vitesse de rotation minimale prédéterminée, le moteur électrique (2) fonctionnant, pendant une durée prédéterminée ou pouvant être prédéterminée, à la vitesse de rotation minimale, jusqu'à ce que les vibrations qui apparaissent dans le système d'entraînement du fait du processus de freinage de la vitesse de rotation réduite à la vitesse de rotation minimale soient largement amorties et, après l'écoulement de la durée prédéterminée dans laquelle le moteur électrique (2), fonctionne à vitesse de rotation minimale, le contrôle ultérieur du moteur électrique (2) est prédéterminé par la régulation (8) sur la base du couple mesuré dans l'unité de mesure (14).

15. Procédé de rotation d'une vis (4) ou d'un écrou avec un couple de serrage prédéterminé au moyen d'un outil de vissage (3) qui est couplé avec un moteur électrique (2) qui est contrôlé par une régulation (8), ce procédé comprenant les étapes suivantes :

- établissement d'une liaison de transmission du couple entre l'outil de vissage (3) et la vis (4) ou l'écrou ;
- accélération du moteur électrique (2) dans la direction de serrage (15) à une vitesse de rotation maximale prédéterminée ;
- fonctionnement du moteur électrique (2) à la vitesse de rotation maximale jusqu'à ce qu'un arbre d'entraînement (11) du moteur électrique (2) ait effectué un nombre prédéterminé de tours de broche, moyennant quoi, pendant cette étape, la vis (4) ou l'écrou est vissé librement dans le contre-filetage (5) correspondant ou le contre-filetage (5) est découpé au moyen de la vis (4) ;
- réduction de la vitesse de rotation du moteur électrique (2) à une vitesse de rotation réduite prédéterminée ;
- fonctionnement du moteur électrique (2) à vitesse de rotation réduite jusqu'à ce qu'une augmentation du couple soit détectée, qui dépasse une valeur seuil prédéterminée, l'augmentation du couple ayant alors lieu lorsque la vis (4) ou l'écrou vient en appui, avec son épaulement (18), contre le composant (7) à fixer ;
- resserrage de la vis (4) ou de l'écrou jusqu'à ce que le couple de serrage prédéterminé soit atteint,

**caractérisé en ce que**
l'augmentation du couple est détectée par une unité de mesure (14) branchée en aval du moteur électrique (2),
et, immédiatement après la détection de l'augmentation du couple, le contrôle ultérieur du moteur électrique (2) est prédéterminé par la régulation (8) sur la base d'une trajectoire de consigne de la valeur de couple, le tracé de la vitesse de rotation étant calculé pendant un pré-contrôle à partir de la trajectoire de consigne de la valeur du couple, moyennant quoi, dans une première phase, après la détection de l'augmentation du couple, la valeur du couple est estimée au moyen d'un observateur de grandeur de perturbation (19) et **en ce que**, dans une deuxième phase, après la détection de l'augmentation du couple, le couple est détecté directement par l'unité de mesure (14) et sert de grandeur d'entrée pour la régulation (8).

# Fig.1

# Fig.2

# Fig.3

# Fig.4

# Fig.5

## Fig.6

## Fig.7

## Fig.8

# Fig.9

# Fig.10

**Fig.11**

**Fig.12**

EP 3 463 756 B1

# Fig.13

# Fig.14

# Fig.15

# Fig.16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2008093402 A1
- US 2013056236 A1